# EUROPEAN PATENT SPECIFICATION

(11) **EP 2 431 339 B1**
(45) Date of publication and mention of the grant of the patent: **13.11.2013**
(21) Application number: 11182070.0
(22) Date of filing: 20.09.2011
(51) Int. Cl.: C03B 33/027, C03B 33/03

(54) **Glass sheet cutting method and system**
Glasscheibenschneideverfahren und -system
Procédé de découpe de feuilles de verre et système

(30) Priority: 20.09.2010 IT TO20100765
(43) Date of publication of application: 21.03.2012
(73) Proprietor: Bottero S.p.A., Cuneo (IT)
(72) Inventor: Arnaudo, Fabio, 12011 Borgo San Dalmazzo (IT); Viglietti, Davide, 12080 Pianfei (IT)
(74) Representative: Bergadano, Mirko

(56) References cited:
- EP-A1- 0 094 309
- EP-A1- 2 196 440
- EP-A1- 2 275 388
- EP-A2- 1 314 703
- JP-A- 63 156 028
- US-A1- 2006 236 840

## Description

The present invention relates to a method and system for cutting sheets of plain or laminated glass.

Glass sheets are cut on score-and-break systems designed for the specific type of glass and having horizontal sheet supporting surfaces and an L-shaped layout. Along a first leg of the L, the sheet is fed in a first direction through a score-and-break assembly, which scores and breaks it along a first line, perpendicular to the first direction, into two aligned pieces. These are arrested one at a time at a junction or corner, and then fed, parallel to themselves and in a second direction perpendicular to the first, along the second leg, where a second score-and-break assembly scores and breaks then successively or simultaneously, along lines perpendicular to the first, into a number of smaller pieces.

Though widely used, known horizontal systems are invariably bulky, on account of the L-shaped layout, and therefore difficult to install in existing plants.

Moreover, the pieces are not usually all cut in the same way and/or into the same number of parts. One piece, for example, may simply be cut into two, and others into more parts, with the result that each pair of pieces cannot be completed until the piece with most cuts is finished, and the next pair of pieces cannot be fed forward until the preceding pair is completed. Throughout this time, the piece cutting bridge is therefore not being used to its full output potential.

Other kind of score-and-break systems are disclosed in EP 2,275,388 A1, US 2006/236840, EP 1314703 A2 and EP 2196440 A1.

The system disclosed in EP 2,275,388 A1 uses only one cutting bridge.

It is an object of the present invention to provide a glass sheet cutting method designed to provide a simple, low-cost solution to the above drawbacks, and in particular to enable the piece cutting bridge to operate to substantially full potential.

According to the present invention, there is provided a method of cutting glass sheets, as claimed in Claim 1.

The present invention also relates to a glass sheet cutting system.

According to the present invention, there is provided a system for cutting glass sheets, as claimed in Claim 5.

A non-limiting embodiment of the present invention will be described by way of example with reference to the accompanying drawings, in which :
Figure 1 shows a schematic plan view, substantially in blocks, of a preferred embodiment of a glass sheet cutting system in accordance with the present invention;
Figures 2 and 3 show the same view of the Figure 1 system in two different operating configurations.

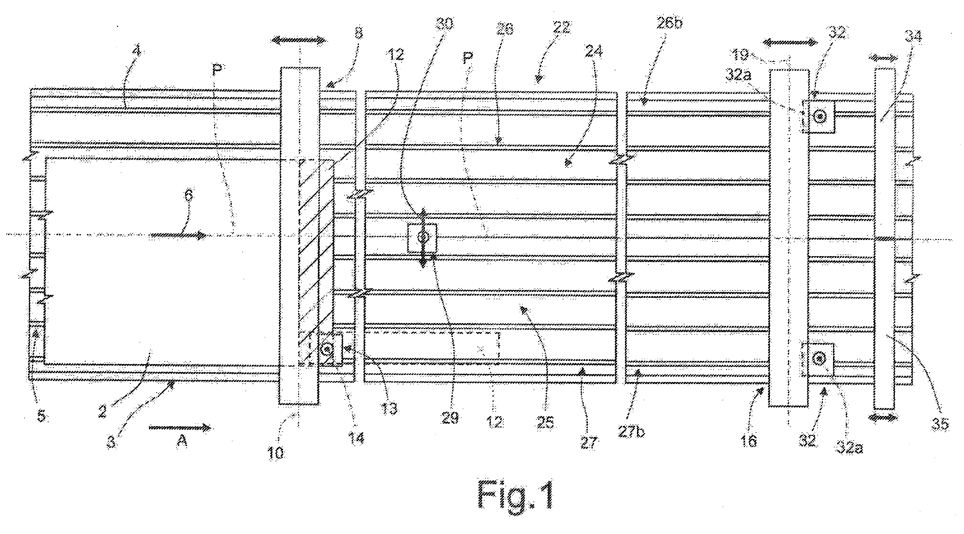

Number 1 in Figure 1 indicates as a whole a straightline system for cutting a sheet 2 of glass.

System 1 comprises a structure 3 defining a horizontal supporting surface 4 for glass sheet 2; and a sheet feed device 5, conveniently a belt or suction cup type, for feeding sheet 32 in a straight travelling direction 6.

As shown in Figure 1, system 1 also comprises a known powered score-and-break assembly 8, not described in detail, for forming in sheet 2 one or more score lines 9 parallel to one another and to a scoring direction 10 perpendicular to direction 6, and for breaking sheet 2 along the score lines into a succession of separate, independent pieces 12, only one of which is shown in Figure 1.

Depending on the type of sheet for cutting, assembly 8 has a single bridge for cutting sheets 2 of plain glass, or a double bridge for cutting sheets 2 of laminated glass, and is either fixed or slides in direction 6 with respect to structure 3.

As shown in Figure 1, associated with assembly 8, system 1 comprises a known, e.g. suction cup, rotating assembly 13, not described in detail, for rotating each piece 12 substantially 90° about a vertical axis 14 perpendicular to supporting surface 4, sheet 2, and direction 6, as shown by the dash line in Figure 1.

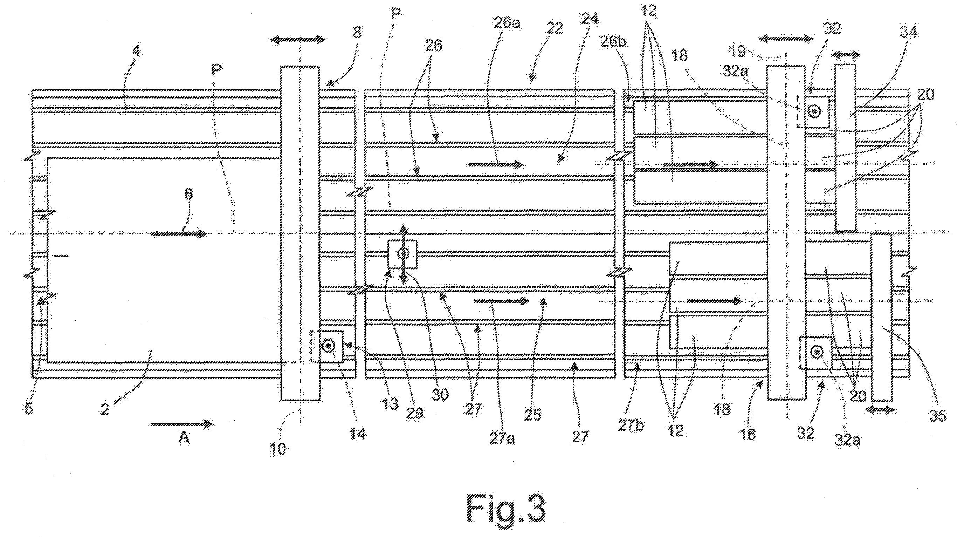

Downstream from rotating assembly 13 in travelling direction 6 of sheet 2, system 1 comprises a further known score-and-break assembly 16, not described in detail, for forming in pieces 12 one or more score lines 18 (Figure 3) parallel to one another and to a scoring direction 19 perpendicular to direction 6 and parallel to direction 10, and for breaking pieces 12 along the score lines into a succession of separate, independent pieces 20 (Figure 3) smaller than pieces 12.

Between rotating assembly 13 and score-and-break assembly 16, system 1 comprises a sorting and distribution area 22 for pieces 12 coming off rotating assembly 13.

Area 22 is preferably defined by a support physically separate from assemblies 8 and 16, and is divided into two adjacent areas 24, 25 separated by a central longitudinal surface P perpendicular to directions 10 and 19. Measured perpendicular to travelling direction 6, areas 24 and 25 are therefore each substantially half the size of supporting surface 4, and, as described in detail below, define two tracks or channels for feeding a number of pieces 12 to assembly 16.

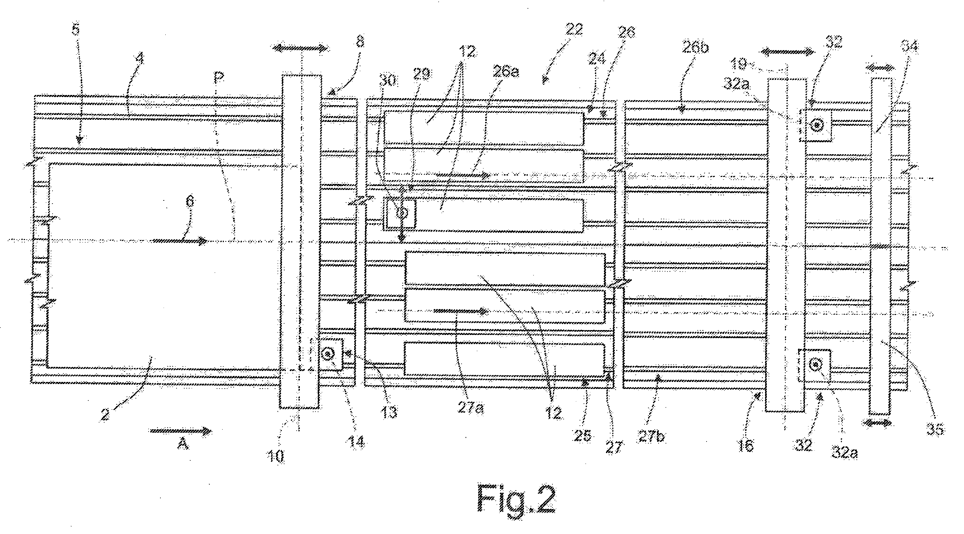

Area 24 and at least part of area 25 define a temporary storage area for some of rotated pieces 12, which are arranged adjacent and equioriented in direction 6, as shown in Figure 2.

Areas 24, 25 house respective independent, preferably belt and air cushion type conveying devices 26, 27 for feeding respective streams of pieces 12 to score-and-break assembly 16 in respective directions 26a, 27a parallel to each other and to direction 6. And, for each conveying device 26, 27, assembly 16 comprises a corresponding, also conveniently belt type, conveying device 26b, 27b forming an extension of conveying device 26, 27 in direction 26a, 27a. Like devices 26, 27, devices 26b, 27b are independent, and feed respective pieces 12 through score-and-break assembly 16.

As shown in Figure 1, in area 22, directly downstream from rotating assembly 13, system 1 comprises a powered, conveniently suction cup type shift device 29 designed to engage an end portion of rotated pieces 12 and shift the engaged pieces 12 in a direction 30 perpendicular to direction 6, so as to shift at least some of pieces 12 inside area 25 and from area 25 to area 24, as shown in Figure 2.

As shown in Figure 1, system 1 also comprises a further two known rotating assemblies 32 similar to rotating assembly 13, and which are located downstream from assembly 16 in the travelling direction of pieces 12, and on opposite sides of direction 6, to rotate at least some of pieces 20 about respective vertical axes 32a parallel to axis 14. Downstream from rotating assemblies 32, devices 26b, 27b have respective longitudinal locating bridges 34, 35 movable back and forth in respective directions 26a, 27a.

In actual use, the work sheet 2 is fed in direction 6 on supporting surface 4, and scored and broken in known manner by assembly 8 into a succession of identical or different pieces 12.

As it comes off assembly 8, each piece 12 is rotated 90° about axis 14 by rotating assembly 13, as shown in Figure 1, and then fed onto conveying device 27 in area 25 of area 22. At this point, some of pieces 12 are engaged by device 29 and shifted, parallel to themselves in direction 30, first inside area 25 and then inside area 24, where the transferred pieces 12 are arranged adjacent to one another on conveying device 26, as shown in Figure 2. The pieces 12 not transferred remain, and are possibly arranged side by side, in area 25.

At this point, two streams of pieces 12 are fed by conveying devices 26, 26b and 27, 27b to assembly 16 and onto respective locating bridges 34, 35, to form a line of side by side pieces 12 through assembly 16, which scores and breaks them simultaneously into a number of pieces 20 (Figure 3).

If pieces 20 are finished as they are, they are fed in direction 6 to the output of system 1. Conversely, if pieces 20 are to be cut further, they are rotated about axis 32a by either of rotating assemblies 32, and cut as required by assembly 16.

At this point, if the remaining parts of pieces 12 upstream from assembly 16 do not need cutting, they are simply fed downstream from assembly 16. Conversely, if some or all of the remaining parts of pieces 12 are to be cut further, they are moved up against locating bridges 34, 35, after these have been repositioned, and then cut by assembly 16.

By extending entirely in one straight direction, system 1 described is therefore much more compact than known solutions, and easily installable in any plant.

Moreover, in system 1 described, the presence of intermediate area 22 for sorting and distributing pieces 12 coming off the first score-and-break assembly, and the way in which area 22 is divided, form on the supporting surface of pieces 12 two independent, parallel 'channels' or lines by which to supply assembly 16 with two streams of side by side pieces 12, equal to the maximum number of pieces than can be handled at one time by assembly 16, which is thus kept running at full-or substantially full-output capacity.

By providing two locating bridges 34, 35, one for each channel or stream of pieces 12, pieces 20 of the same or different sizes can be cut simultaneously, depending on the positions of the locating bridges in direction 6. The pieces coming off assembly 16 can be cut further by rotating them again by means of either of rotating assemblies 32, thus greatly increasing output with respect to known solutions.

Finally, area 22 being defined by a support physically separate from assemblies 8 and 16, no design restrictions exist regarding the size of area 22 and, more importantly, the capacity of the temporary storage area.

Clearly, changes may be made to system 1 described, and in particular to the conveying devices, described by way of example, for conveying sheet 2 and especially pieces 12 and 20. For example, the conveying devices may be designed to feed a larger number of independent streams of pieces to the second score-and-break assembly.

## Claims

1. A method of cutting glass sheets (2), using a system as claimed in Claim 5 the method comprising the steps of feeding a work sheet (2), on a horizontal supporting surface (4), in a straight travelling direction (6); performing, as the sheet moves in said travelling direction (6), a first score-and-break operation using a first score-and-break assembly (8), to cut the sheet (2) into separate pieces (12); rotating each of said pieces (12) 90° about a vertical axis (14) perpendicular to said supporting surface (4) and said travelling direction (6); and performing at least a second score-and-break operation using a second (16) score-and-break assembly distinct from said first assembly (8) on at least some of said pieces (12), by feeding the pieces in the same said travelling direction (6), after said pieces are rotated, and prior to said second score-and-break operation, the method comprising the step of transferring at least some of said pieces (12) to a temporary storage area (24), by translating them parallel to themselves in a direction (30) perpendicular to said travelling direction (6) and said vertical axis (14).

2. A method as claimed in Claim 1, **characterized in that** said pieces (12) are translated in such a manner as to form at least one group of adjacent said pieces (12) in said temporary storage area (24).

3. A method as claimed in Claim 1 or 2, **characterized in that**, after said pieces (12) are rotated and before performing said second score-and-break operation, at least two independent, parallel streams of said pieces (12) are formed moving in said travelling direction (6) to the second score-and-break assembly; a first of said streams comprising at least some of the pieces (12) in said temporary storage area (24); and at least a second of said streams comprising at least some of the pieces rotated 90° but not transferred to said temporary storage area (24).

4. A method as claimed in Claim 3, **characterized in that**, before scoring and breaking said pieces, the pieces in said first stream and the pieces in said second stream are positioned respectively contacting a first and second movable locating bridge (34)(35) independent of each other.

5. A system (1) for cutting glass sheets, the system (1) comprising a horizontal supporting surface (4), first conveying means (5) for feeding a work sheet (2), on said supporting surface (4), in a straight travelling direction (6); a first score-and-break assembly (8) located along said travelling direction (6) to form first score lines (9) in said sheet, and break the sheet (2) along said first score lines into separate pieces (12); rotating means (13) for rotating each of said pieces (12) 90° about a vertical axis (14) perpendicular to said supporting surface (4) and said travelling direction (6); and a second score-and-break assembly (16) located along said travelling direction (6), downstream from said rotating means (13), to form at least a second score line (18) in at least some of said pieces (12), and break the pieces along said second score lines (18); the system being **characterized by** also comprising a temporary storage area (24) for storing at least some of said pieces (12) and located upstream from said second score-and-break assembly (16) and downstream from said rotating means (13); and powered grip-and-carry means (29) movable back and forth in a direction (30) perpendicular to said travelling direction (6) and said vertical axis (14) to transfer at least some of said pieces, parallel to themselves, to said temporary storage area (24).

6. A system as claimed in Claim 5, **characterized by** also comprising second (26) and third (27) conveying means separate and independent of each other, and located between said rotating means (13) and said second score-and-break assembly (16) to form at least two independent, parallel streams of said pieces (12) travelling to said second score-and-break assembly (16) in respective straight directions (26a;27b) parallel to each other and to said travelling direction (6); said second conveying means (26) extending through said temporary storage area (24); and said third conveying means extending outside said temporary storage area (24).

7. A system as claimed in Claim 6, **characterized in that** said second (26) and third conveying means (27) respectively comprise second and third belt conveyors adjacent to each other in said travelling direction (6).

8. A system as claimed in Claim 6 or 7, **characterized by** also comprising, downstream from said second score-and-break assembly (16), a first (34) and second powered locating bridge (35) independent of each other and movable in respective directions parallel to said straight directions (6); the first powered locating bridge (34) defining a locator for at least the stream of pieces conveyed by said second conveying means (26); and the second powered locating bridge (35) defining a locator for the stream of pieces conveyed by said third conveying means (27).

9. A system as claimed in one of Claims 5 to 8, **characterized in that** said temporary storage area (24), measured in a direction perpendicular to said travelling direction (6), is substantially half the size of said supporting surface (4) measured in the same direction.

10. A system as claimed in one of Claims 5 to 9, **characterized by** comprising two further rotating means (32). separate from each other and located downstream from said second score-and-break assembly (16).

## Patentansprüche

1. Verfahren zum Schneiden von Glasscheiben bzw. Glasplatten (2) unter Verwendung eines Systems nach Anspruch 5, wobei das Verfahren die folgenden Schritte aufweist:
Transportieren einer zu bearbeitenden Platte (2) auf einer horizontalen Trägeroberfläche (4) in einer geraden Laufrichtung (6);
Durchführen eines ersten Einkerbungs- und Brechvorgangs, während sich die Platte in die Laufrichtung (6) bewegt, unter Verwendung einer ersten Einkerbungs- und Brechanordnung (8), um die Platte (2) in einzelne Stücke (12) zu schneiden;
Drehen jedes der Stücke (12) um 90° um eine vertikale Achse (14), die senkrecht ist zu der Trägeroberfläche (4) und der Laufrichtung (6); und
Durchführen mindestens eines zweiten Einkerbungs- und Brechvorgangs an mindestens einigen der Stücke (12) unter Verwendung einer von der ersten Anordnung (8) separaten zweiten Einkerbungs- und Brechanordnung (16) durch Transportieren der Stücke in der gleichen Laufrichtung (6);
wobei nach dem Drehen der Stücke und vor dem zweiten Einkerbungs- und Brechvorgang das Verfahren den Schritt des Transferierens mindestens einiger der Stücke (12) zu einem Zwischenlagerbereich (24) aufweist, wobei sie in einer Richtung (30), die senkrecht ist zu der Laufrichtung (6) und der vertikalen Achse (14), parallel zu sich selbst verschoben werden.

2. Verfahren nach Anspruch 1, **dadurch gekennzeichnet, dass** die Stücke (12) in einer solchen Weise verschoben werden, um mindestens eine Gruppe benachbarter Stücke (12) in dem Zwischenlagerbereich (24) zu bilden.

3. Verfahren nach Anspruch 1 oder 2, **dadurch gekennzeichnet, dass** nach dem Drehen der Stücke (12) und vor dem Durchführen des zweiten Einkerbungs- und Brechvorgangs mindestens zwei unabhängige parallele Flüsse der Stücke gebildet werden, die sich in der Laufrichtung (6) zu der zweiten Einkerbungs- und Brechanordnung bewegen; wobei ein erster der Flüsse mindestens einige der Stücke (12) in dem Zwischenlagerbereich (24) aufweist; und wobei mindestens ein zweiter der Flüsse einige der um 90° gedrehten, aber nicht zu dem Zwischenlagerbereich (24) transferierten Stücke aufweist.

4. Verfahren nach Anspruch 3, **dadurch gekennzeichnet, dass** vor dem Einkerben und Brechen der Stücke die Stücke in dem ersten Fluss und die Stücke in dem zweiten Fluss positioniert werden, so dass sie eine erste bzw. zweite bewegbare Positionierungsbrücke (34,35) kontaktieren, die unabhängig voneinander sind.

5. System (1) zum Schneiden von Glasplatten, wobei das System (1) aufweist:
eine horizontale Trägeroberfläche (4);
eine erste Fördereinrichtung (5) zum Transportieren einer zu bearbeitenden Platte (2) auf der Trägeroberfläche (4) in einer geraden Laufrichtung (6);
eine entlang der Laufrichtung (6) angeordnete erste Einkerbungs- und Brechanordnung (8), um erste Einkerbungslinien (9) in der Platte zu bilden und die Platte (2) entlang der ersten Einkerbungslinien in einzelne Stücke (12) zu brechen;
Dreheinrichtungen (13) zum Drehen jedes der Stücke (12) um 90° um eine vertikale Achse (14), die senkrecht ist zu der Trägeroberfläche (4) und der Laufrichtung (6); und
eine entlang der Laufrichtung (6) stromabwärts der Dreheinrichtungen (13) angeordnete zweite Einkerbungs- und Brechanordnung (16), um mindestens eine zweite Einkerbungslinie (18) in mindestens einigen der Stücke (12) zu bilden und die Stücke entlang der zweiten Einkerbungslinien (18) zu brechen;
wobei das System **dadurch gekennzeichnet ist, dass** es außerdem einen stromaufwärts der zweiten Einkerbungs- und Brechanordnung (16) und stromabwärts der Dreheinrichtung (13) angeordneten Zwischenlagerbereich (24) zum Lagern mindestens einiger der Stücke (12) und eine kraftbetriebene Greif- und Transporteinrichtung (29) aufweist, die sich in einer Richtung (30), die senkrecht ist zu der Laufrichtung (6) und der vertikalen Achse (14), hin und her bewegen, um mindestens einige der Stücke parallel zu sich selbst zu dem Zwischenlagerbereich (24) zu transferieren.

6. System nach Anspruch 5, **dadurch gekennzeichnet, dass** es außerdem separate und voneinander unabhängige zweite (26) und dritte (27) Fördereinrichtungen aufweist, die zwischen der Dreheinrichtung (13) und der zweiten Einkerbungs- und Brechanordnung (16) angeordnet sind, um mindestens zwei unabhängige parallele Flüsse der Stücke (12) zu bilden, die in jeweiligen geraden Richtungen (26a;27a), die zueinander und zu der Laufrichtung (6) parallel sind, zu der zweiten Einkerbungs- und Brechanordnung (16) laufen; wobei die zweite Fördereinrichtung (26) sich durch den Zwischenlagerbereich (24) erstreckt und die dritte Fördereinrichtung (27) sich außerhalb des Zwischenlagerbereichs (24) erstreckt.

7. System nach Anspruch 6, **dadurch gekennzeichnet, dass** die zweiten (26) und dritten (27) Fördereinrichtungen jeweils zweite und dritte Bandförderer aufweisen, die in der Laufrichtung (6) nebeneinander angeordnet sind.

8. System nach Anspruch 6 oder 7, **dadurch gekennzeichnet, dass** es außerdem stromabwärts der zweiten Einkerbungs- und Brechanordnung (16) eine erste (34) und zweite (35) kraftbetriebene Positionierungsbrücke aufweist, die unabhängig voneinander sind und in jeweilige Richtungen parallel zu der geraden Richtung (6) bewegbar sind; wobei die erste kraftbetriebene Positionierungsbrücke (34) einen Positionierer für mindestens den von den zweiten Fördereinrichtungen (26) geförderten Stückefluss bildet; und die zweite kraftbetriebene Positionierungsbrücke (35) einen Positionierer für den von den dritten Fördereinrichtungen (27) geförderten Stückefluss bildet.

9. System nach einem der Ansprüche 5 bis 8, **dadurch gekennzeichnet, dass**, gemessen in eine Richtung senkrecht zu der Laufrichtung (6), der Zwischenlagerbereich (24) im Wesentlichen die halbe Größe hat wie die Trägeroberfläche (4), gemessen in die gleiche Richtung.

10. System nach einem der Ansprüche 5 bis 9, **dadurch gekennzeichnet, dass** es zwei weitere voneinander separate Dreheinrichtungen (32) aufweist, die stromabwärts der zweiten Einkerbungs- und Brechanordnung (16) angeordnet sind.

## Revendications

1. Procédé de découpe de feuilles de verre (2), utilisant un système tel que revendiqué dans la revendication 5, cette méthode comprenant les étapes consistant à convoyer une feuille à travailler (2) sur une surface horizontale de support (4) selon une direction rectiligne de déplacement (6), à effectuer, pendant que la feuille se meut dans ladite direction de déplacement (6), une première opération de marquage-rupture utilisant un premier assemblage de marquage-rupture (8) pour couper la feuille (2) en pièces distinctes (12), à tourner chacune desdites pièces (12) de 90° autour d'un axe vertical (14) perpendiculaire à la surface de support (4) et à ladite direction de déplacement (6), et à effectuer au moins une seconde opération de marquage-rupture utilisant un second assemblage de marquage-rupture (16) distinct dudit premier assemblage de marquage-rupture (8) sur au moins certaines desdites pièces (12) en amenant lesdites pièces dans ladite même direction de déplacement (6) après que lesdites pièces aient été tournées, et antérieurement à ladite seconde opération de marquage-rupture, le procédé comportant une étape consistant à transférer au moins certaines desdites pièces (12) vers une zone de stockage temporaire (24) par une translation parallèlement à elles-mêmes dans une direction (30) perpendiculaire à ladite direction de déplacement (6) et ledit axe vertical (14).

2. Procédé selon la revendication 1, **caractérisé en ce que** lesdites pièces (12) sont déplacées en translation de manière à former au moins un groupe adjacent auxdites pièces (12) dans ladite zone de stockage temporaire (24).

3. Procédé selon la revendication 1 ou 2, **caractérisé en ce que**, après que les pièces (12) aient été tournées et avant la seconde opération de marquage-rupture, au moins deux courants indépendants, parallèles desdites pièces (12) sont constitués en se déplaçant dans ladite direction de déplacement (6) vers le second assemblage de marquage-rupture ; un premier desdits courants comportant au moins certaines des pièces (12) dans ladite zone de stockage temporaire (24) et au moins un second desdits courants comportant au moins certaines desdites pièces tournées de 90° mais non transférées dans ladite zone de stockage temporaire (24).

4. Procédé selon la revendication 3, **caractérisé en ce que**, avant de marquer et de rompre lesdites pièces, les pièces dudit premier courant et lesdites pièces dudit second courant sont positionnées respectivement en contact avec un premier et un second pont mobile de localisation (34, 35), indépendants l'un de l'autre.

5. Système (1) pour découper des feuilles de verre, le système (1) comportant une surface de support horizontale (4), des premiers moyens de convoyage (5) pour convoyer une feuille à travailler (2) sur ladite surface de support (4) selon une direction rectiligne de déplacement (6) ; un premier assemblage de marquage-rupture (8) disposé le long de ladite direction de déplacement (6) pour former des premières lignes de marquage (9) dans ladite feuille, et pour briser la feuille (2) le long desdites premières lignes de marquage en pièces distinctes (12) ; des moyens de rotation (13) pour tourner chacune desdites pièces (12) de 90° autour d'un axe vertical (14) perpendiculaire à ladite surface de support (4) et à ladite direction de déplacement (6) ; et un second assemblage de marquage-rupture (16) disposé le long de ladite direction de déplacement (6) en aval desdits moyens de rotation (13) pour former au moins une seconde ligne de marquage (18) dans au moins une desdites pièces (12) et briser les pièces le long desdites secondes lignes de marquage (18), le système étant **caractérisé en ce qu'**il comporte également une zone de stockage temporaire (24) pour stocker au moins certaines desdites pièces (12) et localisée en amont par rapport au second assemblage de marquage-rupture (16) et en aval par rapport auxdits moyens de rotation (13) ; et des moyens de prise en charge et de transport mécanisés (29) déplaçables vers l'arrière et vers l'avant selon une direction (30) perpendiculaire à ladite direction de déplacement (6) et audit axe vertical (14) pour transférer au moins une partie desdites pièces (12), parallèlement à elles-mêmes, vers ladite zone de stockage temporaire (24).

6. Système selon la revendication 5, **caractérisé en ce qu'**il comporte également des deuxièmes (26) et des troisièmes (27) moyens de convoyage séparés et indépendants les uns par rapport aux autres et disposés entre lesdits moyens de rotation (13) et ledit second assemblage de marquage-rupture (16) pour former au moins deux courants indépendants parallèles desdites pièces (12), se déplaçant vers le second assemblage de marquage-rupture (16) dans des directions respectivement rectilignes (26a, 27a) parallèles entre elles et à ladite direction de déplacement (6) ; lesdits deuxièmes moyens de convoyage (26) s'étendant à travers ladite zone temporaire de stockage (24) ; et lesdits troisièmes moyens de convoyage s'étendant à l'extérieur de ladite zone temporaire de stockage (24).

7. Système selon la revendication 6, **caractérisé en ce que** lesdits deuxièmes (26) et troisièmes (27) moyens de convoyage comportent respectivement un deuxième et un troisième convoyeur à bande adjacents dans ladite direction de déplacement (6).

8. Système selon la revendication 6 ou 7, **caractérisé en ce qu'**il comporte également, en aval dudit second assemblage de marquage-rupture (16), un premier (34) et un second pont de positionnement mécanisé (35) indépendants l'un de l'autre et mobile dans des directions respectives parallèles à ladite direction rectiligne de déplacement (6) ; le premier pont de positionnement mécanisé (34) définissant un positionneur pour au moins le courant de pièces acheminées par lesdits deuxièmes moyens de convoyage (26) ; et le second pont de positionnement mécanisé (35) définissant un positionneur pour au moins le courant de pièces acheminées par lesdits troisièmes moyens de convoyage (27).

9. Système selon l'une des revendications 5 à 8, **caractérisé en ce que** ladite zone temporaire de stockage (24), mesurée dans une direction perpendiculaire à ladite direction de déplacement (6) a sensiblement la moitié de la dimension de la surface de support (4), mesurée dans la même direction.

10. Système selon l'une des revendications 5 à 9, **caractérisé en ce qu'**il comprend deux autres moyens de rotation (32) séparés l'un de l'autre et disposés en aval par rapport au second assemblage de marquage-rupture (16).
